# EUROPEAN PATENT APPLICATION

(11) **EP 3 954 887 A1**
(43) Date of publication of application: **16.02.2022**
(21) Application number: 21184738.9
(22) Date of filing: 09.07.2021
(51) Int. Cl.: F02D 41/14, G01M 15/04, G01M 15/05

(54) **ENGINE TEST METHOD, COMPUTER PROGRAM, AND DEVICE**

(30) Priority: 14.08.2020 JP 2020137043
(71) Applicant: Transtron, Inc., yokohama-shi, Kanagawa 222-0033 (JP)
(72) Inventor: Ogawa, Masatoshi, Kanagawa, 222-0033 (JP); Degawa, Takuma, Kanagawa, 222-0033 (JP)
(74) Representative: Hoffmann Eitle

(57) **Abstract**

A computer executes processing of: generating a test pattern in which a plurality of manipulated variables used for an engine test change in chronological order; correcting the test pattern based on first coverage of a first space that the manipulated variable is allowed to take and second coverage of a second space that a change rate value of the manipulated variable is allowed to take; correcting the test pattern based on an excess air ratio; and performing an engine test using the corrected test pattern to acquire time-series data on the manipulated variables and controlled amounts of the manipulated variables.

## Description

### FIELD

The embodiments discussed herein are related to an engine test method, a computer program, and a device.

### BACKGROUND

Automotive engine tests in which chirp signals are used to change manipulated variables used for a test in chronological order have been performed. In an engine test using chirp signals, control is performed such that manipulated variables are changed to perform a test with high coverage.

### TECHNICAL PROBLEM

However, depending on manipulated variables in an engine test, an engine may be operated in abnormal states where exhaust gas deteriorates or accidental fire occurs.

Accordingly, it is an object in one aspect of an embodiment of the invention to provide an engine test method, a computer program, and a device capable of performing an engine test with high safety.

### SUMMARY

According to an aspect of the embodiments, an engine test method includes executing, by a computer, processing of: generating a test pattern in which a plurality of manipulated variables used for an engine test change in chronological order; correcting the test pattern based on an excess air ratio; and performing an engine test using the corrected test pattern to acquire time-series data on the manipulated variables and controlled amounts of the manipulated variables.

### BRIEF DESCRIPTION OF DRAWINGS

FIG. 1 is a diagram illustrating an example of an engine test using chirp signals;
FIG. 2 is a functional block diagram illustrating a functional configuration of a test device 100 according to a first embodiment;
FIG. 3 is a diagram illustrating an example of an engine test according to the first embodiment;
FIG. 4 is a diagram illustrating an example of signal correction based on coverage according to the first embodiment;
FIG. 5 is a diagram illustrating an example of signal correction based on an excess air ratio according to the first embodiment;
FIG. 6 is a flowchart illustrating the flow of test pattern generation processing according to the first embodiment;
FIG. 7 is a diagram for describing a hardware configuration example;
FIG. 8 is a block diagram of an engine test using chirp signals;
FIG. 9 is a block diagram of a chirp signal correction unit;
FIG. 10 is a block diagram of a first chirp signal correction unit; and
FIG. 11 is a block diagram of a second chirp signal correction unit.

### DESCRIPTION OF EMBODIMENTS

Preferred embodiments will be explained with reference to accompanying drawings. Note that the present invention is not limited by the embodiments. The embodiments can be combined as appropriate without causing contradiction.

### [a] First Embodiment

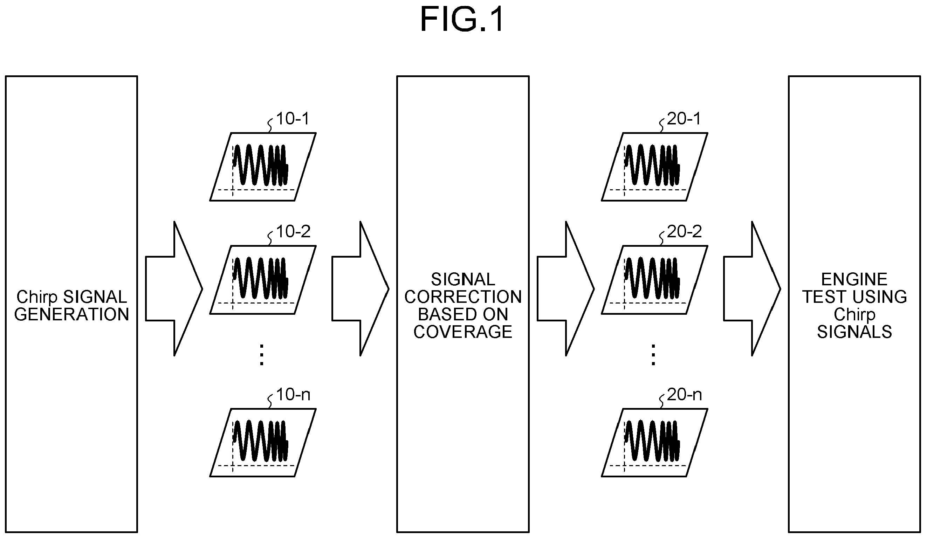

First, an engine test using chirp signals is described. FIG. 1 is a diagram illustrating an example of an engine test using chirp signals. Chirp signals used for the engine test are data indicating a time-series change of manipulated variables used for the engine test, that is, test patterns. Such a chirp signal exists for each manipulated variable.

Specific examples of the manipulated variables used for the engine test include a fuel injection amount, an exhaust gas recirculation (EGR) rate, a turbine opening degree, and an intake throttle (ITH) opening degree. In this specification, the manipulated variable is sometimes simply referred to as "variable".

In the example in FIG. 1, first, chirp signals 10-1 to 10-n are generated for manipulated variables 1 to n (n is any integer), respectively. For example, when the number of manipulated variables used for an engine test is five, chirp signals 10-1 to 10-5 are generated.

The generated chirp signals 10-1 to 10-n are corrected to chirp signals 20-1 to 20-n such that coverages of both a space that the manipulated variables 1 to n are allowed to take and a space that change rate values of the manipulated variables 1 to n are allowed to take are maximized. The change rate value of the manipulated variable is a value indicating the rate to change the manipulated variable. Depending on manipulated variables, for example, when the manipulated variable is abruptly changed in an engine test, a dangerous state may be caused.

The corrected chirp signals 20-1 to 20-n are used to perform an engine test. However, depending on manipulated variables and change rate values in an engine test, that is, the chirp signals 20-1 to 20-n and change rates thereof, an engine may be operated in an abnormal state where exhaust gas deteriorates or accidental fire occurs. Thus, the test device 100 in the present embodiment corrects a test pattern, which is a chirp signal, and acquires time-series data on an manipulated variable and a controlled amount of the manipulated variable for performing an engine test with high safety.

### Functional configuration of test device 100

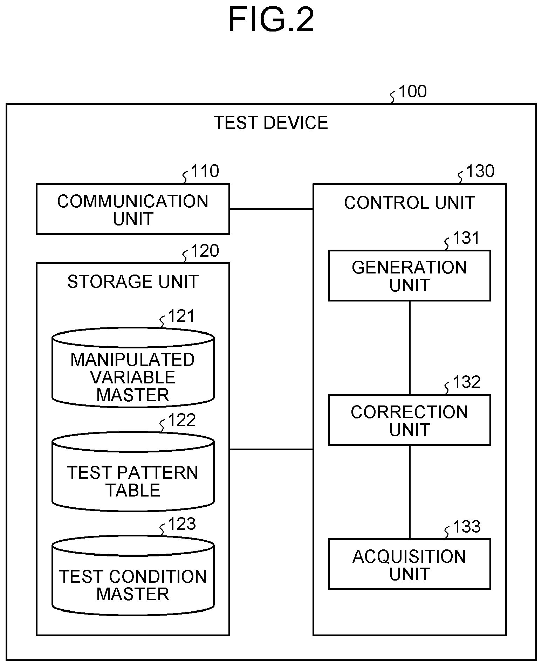

Next, a functional configuration of the test device 100 is described. FIG. 2 is a functional block diagram illustrating the functional configuration of the test device 100 according to a first embodiment. As illustrated in FIG. 2, the test device 100 includes a communication unit 110, a storage unit 120, and a control unit 130.

The communication unit 110 is a processing unit that controls communication with another device, and is, for example, a communication interface.

The storage unit 120 is an example of a storage device for storing therein various kinds of data and computer programs executed by the control unit 130, and is, for example, a memory or a hard disk. The storage unit 120 stores therein an manipulated variable master 121, a test pattern table 122, and a test condition master 123.

The manipulated variable master 121 is a master in which information on manipulated variables used for engine tests is stored. For example, the manipulated variable master 121 can store therein manipulated variables to be used, the range where the value of the manipulated variable is allowed to take, and the coverage of the manipulated variable for each engine test in association with one another.

The test pattern table 122 is a table in which information on chirp signals generated and corrected by the test device 100 is stored. For example, the test pattern table 122 can store generated and corrected chirp signals therein in association with each engine test.

The test condition master 123 is a master in which information on test conditions for performing an engine test with high safety is stored. For example, the test condition master 123 can store therein the range of a combination of manipulated variables that are not allowed to take and the change rate values of the manipulated variable for each engine test in association with one another.

Note that the above is merely an example, and various pieces of information other than the above-mentioned table and masters can be stored in the storage unit 120.

The control unit 130 is a processing unit that controls the entire test device 100, and is, for example, a processor. The control unit 130 includes a generation unit 131, a correction unit 132, and an acquisition unit 133. Note that each processing unit is an example of an electronic circuit included in a processor or a process executed by the processor.

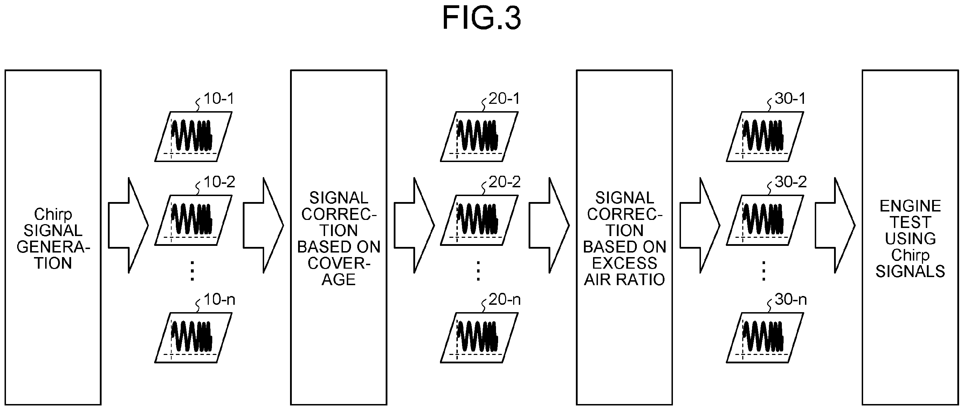

The control unit 130 controls the generation unit 131, the correction unit 132, and the acquisition unit 133 to acquire time-series data on an manipulated variable and a controlled amount of the manipulated variable for performing an engine test with high safety. FIG. 3 is a diagram illustrating an example of an engine test according to the first embodiment.

As illustrated in FIG. 3, the control unit 130 generates chirp signals 10-1 to 10-n for manipulated variables 1 to n, respectively, and corrects the chirp signals 10-1 to 10-n to chirp signals 20-1 to 20-n based on coverage. The control unit 130 further corrects the chirp signals 20-1 to 20-n to chirp signals 30-1 to 30-n based on an excess air ratio. Details of the processing for correcting the chirp signals based on the coverage and the excess air ratio are described later.

The control unit 130 uses the chirp signals 30-1 to 30-n to perform an engine test. The engine test may be a test using a real engine, or may be a virtual test using a virtual engine.

Note that, in the example in FIG. 3, the chirp signals 10-1 to 10-n and the corrected chirp signals 20-1 to 20-n are indicated by the same waveforms, but these are merely images, and in actual cases, chirp signals may indicate waveforms different from one another. All pieces of the processing of generation and correction of the chirp signals and the execution of the engine test do not need to be executed by the test device 100. Different devices may be used to execute the pieces of processing.

The generation unit 131 generates a test pattern in which a plurality of manipulated variables used for an engine test change in chronological order. Specifically, for example, the generation unit 131 generates, for manipulated variables 1 to n, chirp signals 10-1 to 10-n that change the respective manipulated variables in chronological order based on manipulated variables and the range of values that the manipulated variables are allowed to take stored in the manipulated variable master 121.

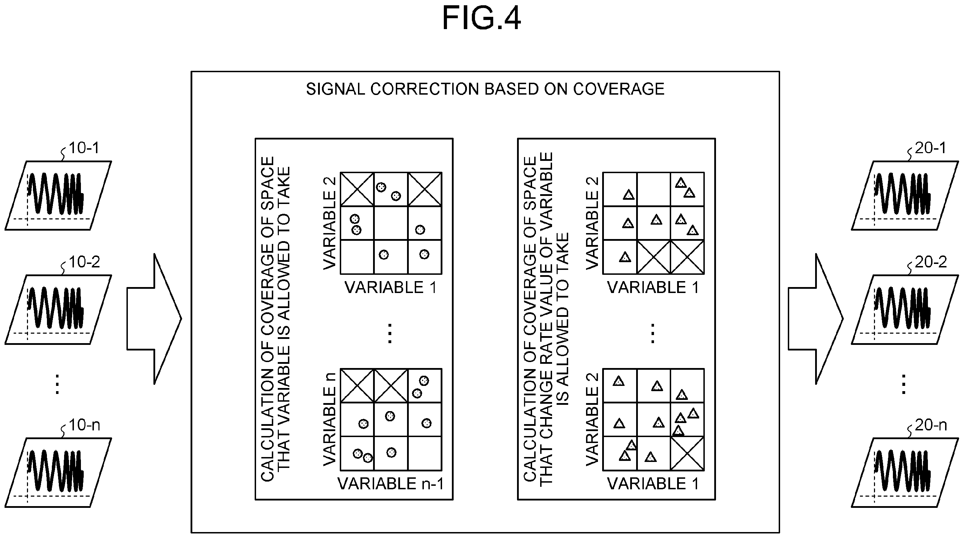

The correction unit 132 corrects the test pattern generated by the generation unit 131 based on first coverage of a first space that the manipulated variable is allowed to take and second coverage of a second space that a change rate value of the manipulated variable is allowed to take. FIG. 4 is a diagram illustrating an example of signal correction based on the coverage according to the first embodiment. As illustrated in FIG. 4, the correction unit 132 corrects the chirp signals 10-1 to 10-n generated by the generation unit 131 so as to maximize the coverage of both of the space that the manipulated variables 1 to n are allowed to take and the space of the change rate values of the manipulated variables 1 to n are allowed to take.

The space that the manipulated variables 1 to n are allowed to take is, for example, as illustrated in FIG. 4, a coordinate space that a combination of the manipulated variables is allowed to take. Regarding the coordinate space, a coordinate space that a combination of an manipulated variable 1 and an manipulated variable 2 is allowed to take is described as an example. The coverage becomes higher as the combination of the manipulated variable 1 and the manipulated variable 2 more evenly covers the coordinate space by chirp signals indicating time-series changes of the manipulated variables. In this manner, the chirp signal is corrected such that the coverage of a space that the manipulated variable is allowed to take increases.

The coverage of the space that the manipulated variable is allowed to take is calculated, for example, as illustrated in FIG. 4, by dividing a coordinate space into a plurality of domains and based on the proportion of the presence/absence of a combination of manipulated variables to each domain.

As indicated by × in the domain in FIG. 4, there may be a domain that is not allowed to take depending on a combination of manipulated variables. Thus, the correction unit 132 corrects a chirp signal such that a combination of the manipulated variable is not included in the domain after removing the domain from the coordinate space.

The space that the change rate values of the manipulated variables 1 to n are allowed to take is the same as the above description of the space that the manipulated variables 1 to n are allowed to take. As described above, the correction unit 132 corrects the chirp signals 10-1 to 10-n to the chirp signals 20-1 to 20-n such that the coverage of both of a space that the respective manipulated variables are allowed to take and a space that the change rate values of the manipulated variables are allowed to take is maximized.

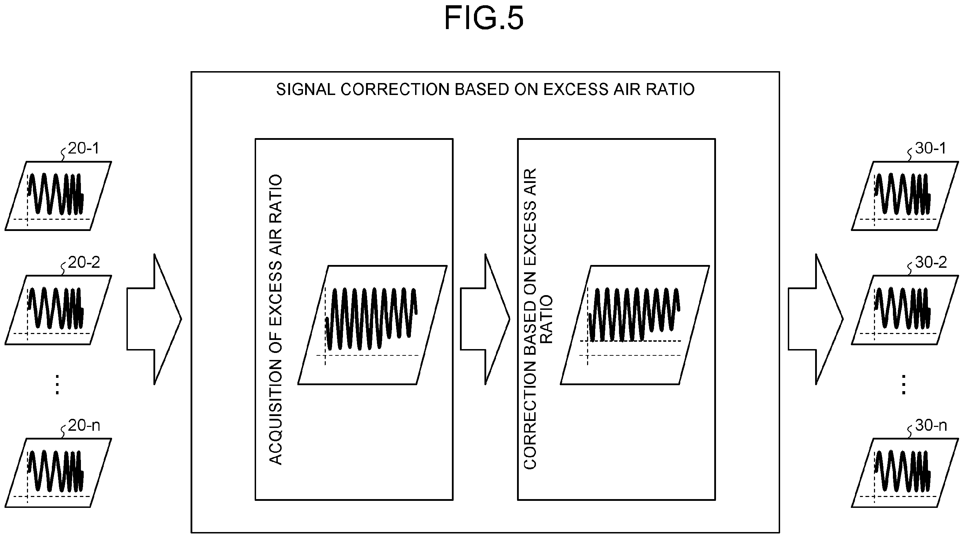

The correction unit 132 corrects the test pattern based on the excess air ratio. FIG. 5 is a diagram illustrating an example of signal correction based on an excess air ratio according to the first embodiment. As illustrated in FIG. 5, the correction unit 132 corrects the chirp signals 20-1 to 20-n such that the excess air ratio does not fall below a predetermined threshold.

For example, the excess air ratio is acquired by dividing the mass of air taken in the engine by the ideal mass of air for completely combusting supplied fuel. For example, when the excess air ratio falls below a predetermined threshold, such as 1.0, incomplete combustion is caused, and an engine is operated in abnormal states where carbon monoxide and black smoke increase. The excess air ratio is affected by manipulated variables such as a fuel injection amount, an EGR rate, a turbine opening degree, and an intake throttle opening degree. Thus, the correction unit 132 provides an lower limit such that the excess air ratio does not fall below the predetermined threshold, and corrects the respective manipulated variables, that is, the chirp signals 20-1 to 20-n, to chirp signals 30-1 to 30-n.

Note that, when the excess air ratio exceeds the predetermined threshold, air is supplied more than needed, and exhaust gas heat loss increases. Thus, the correction unit 132 may further provide an upper limit for the excess air ratio, and correct the chirp signals such that the excess air ratio is maintained within a predetermined range.

Based on regulation values of exhaust gas components such as hydrocarbon (HC), carbon monoxide (CO), and nitrogen oxide (NOx), the correction unit 132 can correct the chirp signals such that the concentrations of the components do not exceed the respective regulation values. The correction of the chirp signals based on the regulation values of the exhaust gas components may be executed in addition to or in place of the correction of the chirp signals based on the excess air ratio.

The acquisition unit 133 performs an engine test using the corrected test pattern to acquire time-series data on manipulated variables 1 to n and controlled amounts of the manipulated variables 1 to n. The engine test performed in this case may be a test using a real engine, or may be a virtual test using a virtual engine.

In an engine test performed thereafter, the time-series data acquired by the acquisition unit 133 can be used such that each manipulated variable is controlled by each controlled amount to perform an engine test with high safety.

### Flow of Processing

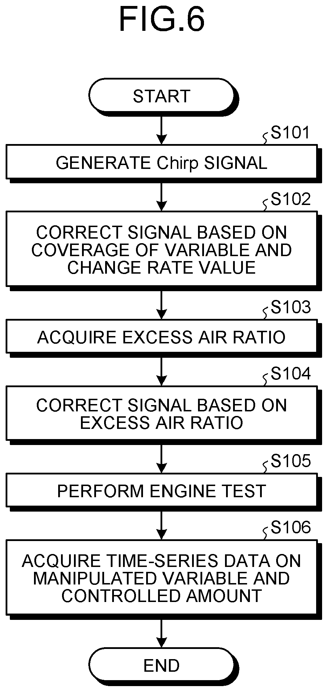

Next, the flow of test pattern generation processing according to the first embodiment is described. FIG. 6 is a flowchart illustrating the flow of test pattern generation and correction processing according to the first embodiment.

First, as illustrated in FIG. 6, the generation unit 131 in the test device 100 generates a chirp signal for each manipulated variable as a test pattern in which a plurality of manipulated variables used for an engine test change in chronological order (Step S101).

Next, the correction unit 132 in the test device 100 corrects the chirp signals generated at Step S101 based on coverage of a space that the manipulated variable is allowed to take and coverage of a space that a change rate value of the manipulated variable is allowed to take (Step S102) .

Next, the correction unit 132 acquires an excess air ratio (Step S103), and further corrects the chirp signals corrected at Step S102 based on the excess air ratio (Step S104). The correction unit 132 may execute the correction of the chirp signals based on a regulation value of an exhaust gas component in place of the correction of the chirp signals based on the excess air ratio (Steps S103 and S104) .

Next, the acquisition unit 133 in the test device 100 uses the chirp signals corrected at Step S104 to perform an engine test (Step S105), and acquires time-series data on the manipulated variables and controlled amounts of the manipulated variables (Step S106). After the execution of Step S106, the processing illustrated in FIG. 6 is finished.

### Effects

As described above, the test device 100 generates a test pattern in which a plurality of manipulated variables used for an engine test change in chronological order, corrects the test pattern based on an excess air ratio, and performs an engine test using the corrected test pattern to acquire time-series data on the manipulated variables and controlled amounts of the manipulated variables.

In this manner, when an engine test is performed thereafter, the time-series data can be used to control the manipulated variable to perform an engine test with high safety.

The processing of generating a test pattern executed by the test device 100 includes processing of generating, as a test pattern, a chirp signal indicating a time-series change in an manipulated variable.

In this manner, an engine test using chirp signals with safety and high coverage can be performed.

The test device 100 further executes processing of correcting the test pattern based on first coverage of a first space that the manipulated variable is allowed to take and second coverage of a second space that a change rate value of the manipulated variable is allowed to take.

In this manner, an engine test with safety and high coverage can be performed.

The test device 100 further executes at least one piece of processing of removing a domain that the manipulated variable is not allowed to take from the first space, and processing of removing a domain that the change rate value is not allowed to take from the second space.

In this manner, the test pattern can be corrected so as not to cause an abnormal state, thereby performing an engine test with more safety and higher coverage.

The test device 100 further executes processing of correcting the test pattern based on a regulation value of exhaust gas.

In this manner, the test pattern can be corrected so as to comply with the regulation of exhaust gas, thereby performing an engine test with higher safety.

The processing of correcting the test pattern based on the excess air ratio executed by the test device 100 includes processing of correcting the test pattern by changing a fuel injection amount, which is one of the manipulated variables.

In this manner, the excess air ratio can be more efficiently adjusted to correct the test pattern for performing an engine test with high safety.

The processing of correcting the test pattern based on the excess air ratio executed by the test device 100 includes processing of correcting the test pattern by changing an EGR rate, which is one of the manipulated variables.

In this manner, the excess air ratio can be more efficiently adjusted to correct the test pattern for performing an engine test with high safety.

The processing of correcting the test pattern based on the excess air ratio executed by the test device 100 includes processing of correcting the test pattern by changing a turbine opening degree, which is one of the manipulated variables.

In this manner, the excess air ratio can be more efficiently adjusted to correct the test pattern for performing an engine test with high safety.

The processing of correcting the test pattern based on the excess air ratio executed by the test device 100 includes processing of correcting the test pattern by changing an intake throttle opening degree, which is one of the manipulated variables.

In this manner, the excess air ratio can be more efficiently adjusted to correct a test pattern for performing an engine test with high safety.

### System

The processing procedures, control procedures, specific names, and information including various data and parameters illustrated in the above documents and drawings can be changed at will, except as otherwise noted. The specific examples, distributions, and numerical values described in the embodiments are merely an example, and can be changed at will.

The illustrated components of the devices are functionally conceptual, and the system does not need to be physically configured as illustrated. That is, the specific forms of distribution and integration of the devices are not limited to the illustrated ones. In other words, the whole or a part of the devices can be functionally or physically distributed or integrated in desired units depending on various kinds of loads and use situations. For example, the generation unit 131 and the correction unit 132 in the test device 100 can be integrated.

In addition, all or any part of the processing functions performed by each device can be implemented by a CPU and a computer program that is analyzed and executed by the CPU, or by hardware using wired logic.

### Hardware

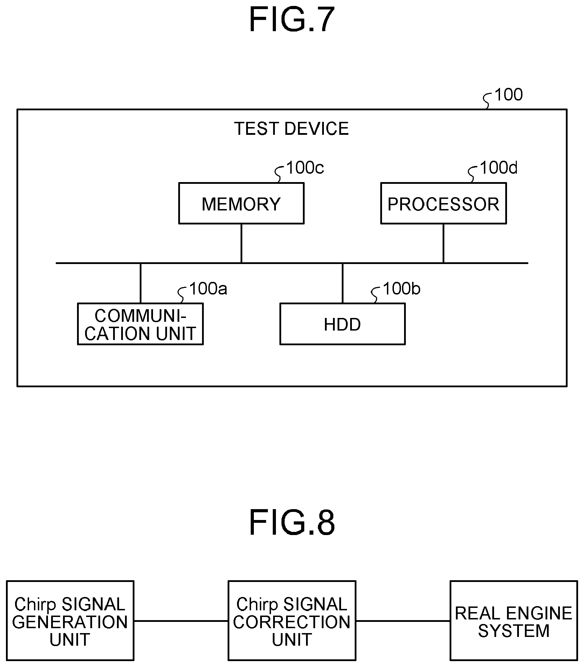

A hardware configuration of the above-mentioned test device 100 is described. FIG. 7 is a diagram illustrating a hardware configuration example. As illustrated in FIG. 7, the test device 100 includes a communication unit 100a, a hard disk drive (HDD) 100b, a memory 100c, and a processor 100d. The units illustrated in FIG. 7 are mutually connected by a bus.

The communication unit 100a is a network interface card, and communicates with other servers. The HDD 100b stores therein computer programs for operating the functions illustrated in FIG. 2 and DBs.

The processor 100d reads a computer program for executing the same processing as the processing units illustrated in FIG. 2 from the HDD 100b and expands the computer program onto the memory 100c, thereby operating a process for executing the functions described above with reference to FIG. 2. For example, the process executes the same functions as the processing units included in the test device 100. Specifically, for example, the processor 100d reads a computer program having the same functions as the generation unit 131 and the correction unit 132 from the HDD 100b. The processor 100d executes a process for executing the same processing as the generation unit 131 and the correction unit 132.

As described above, the test device 100 reads and executes a computer program to operate as an information processing device for executing the processing. The test device 100 may read the above-mentioned computer program from a recording medium by a medium reading device, and execute the read computer program to implement the same functions as in the above-mentioned embodiment. Note that computer programs in other embodiments are not limited to the ones executed by the test device 100. For example, the present invention can be similarly applied even when another computer or a server executes a computer program or when the computer and the server execute a computer program in a cooperative manner.

Note that the computer program can be distributed through a network such as the Internet. The computer program can be executed in a manner that the computer program is recorded in a computer-readable recording medium such as a hard disk, a flexible disk (FD), a CD-ROM, a magneto-optical disk (MO), and a digital versatile disc (DVD) and read from the recording medium by a computer. [b] Second Embodiment

While the example of the present invention has been described above, the present invention may be carried out by various different forms and configurations other than the above-mentioned embodiment. For example, the test device 100 may have a configuration described below.

FIG. 8 is a block diagram of an engine test using chirp signals. A chirp signal generation unit and a chirp signal correction unit in FIG. 8 are an example of the generation unit 131 and the correction unit 132 in the test device 100, respectively. A real engine system in FIG. 8 may be a real engine, a virtual engine, or an engine model that is a machine learning model generated by using a real engine.

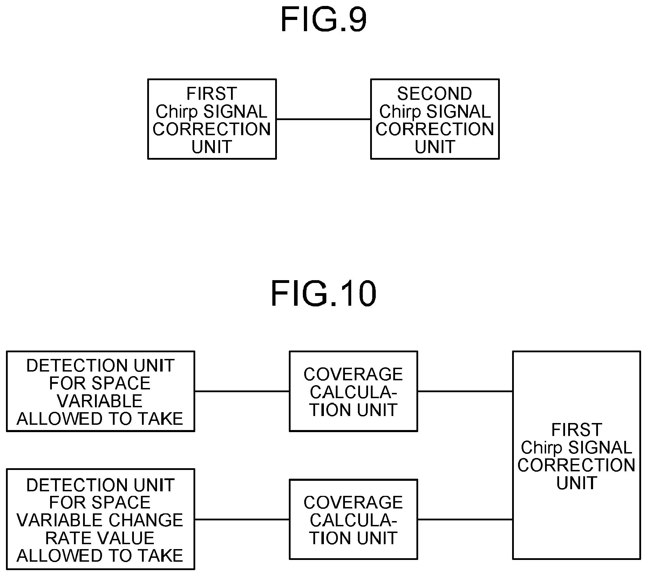

FIG. 9 is a block diagram of the chirp signal correction unit. As illustrated in FIG. 9, the chirp signal correction unit in FIG. 8 may be configured by a first chirp signal correction unit and a second chirp signal correction unit.

FIG. 10 is a block diagram of the first chirp signal correction unit. As illustrated in FIG. 10, the first chirp signal correction unit in FIG. 9 may be configured by coverage calculation units, and a detection unit for space a variable is allowed to take and a detection unit for space a variable is allowed to take.

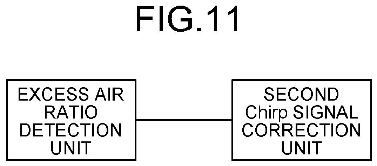

FIG. 11 is a block diagram of the second chirp signal correction unit. As illustrated in FIG. 11, the second chirp signal correction unit in FIG. 9 may be configured by an excess air ratio detection unit.

According to one aspect, an engine test with high safety can be performed.

## Claims

1. An engine test method comprising executing, by a computer, processing of:
generating a test pattern in which a plurality of manipulated variables used for an engine test change in chronological order;
correcting the test pattern based on an excess air ratio; and
performing an engine test using the corrected test pattern to acquire time-series data on the manipulated variables and controlled amounts of the manipulated variables.

2. The engine test method according to claim 1, wherein the processing of generating a test pattern includes processing of generating, as a test pattern, a chirp signal indicating a time-series change in an manipulated variable.

3. The engine test method according to claim 1, further including executing, by the computer, processing of correcting the test pattern based on first coverage of a first space that the manipulated variable is allowed to take and second coverage of a second space that a change rate value of the manipulated variable is allowed to take.

4. The engine test method according to claim 3, further including executing, by the computer, at least one piece of:
processing of removing a domain that the manipulated variable is not allowed to take from the first space, and
processing of removing a domain that the change rate value is not allowed to take from the second space.

5. The engine test method according to claim 1, further including executing, by the computer, processing of correcting the test pattern based on a regulation value of exhaust gas.

6. The engine test method according to claim 1, wherein the processing of correcting the test pattern based on the excess air ratio includes processing of correcting the test pattern by changing a fuel injection amount, which is one of the manipulated variables.

7. The engine test method according to claim 1, wherein the processing of correcting the test pattern based on the excess air ratio includes processing of correcting the test pattern by changing an EGR rate, which is one of the manipulated variables.

8. The engine test method according to claim 1, wherein the processing of correcting the test pattern based on the excess air ratio includes processing of correcting the test pattern by changing a turbine opening degree, which is one of the manipulated variables.

9. The engine test method according to claim 1, wherein the processing of correcting the test pattern based on the excess air ratio includes processing of correcting the test pattern by changing an intake throttle opening degree, which is one of the manipulated variables.

10. A computer program that causes a computer to execute processing of:
generating a test pattern in which a plurality of manipulated variables used for an engine test change in chronological order;
correcting the test pattern based on an excess air ratio; and
performing an engine test using the corrected test pattern to acquire time-series data on the manipulated variables and controlled amount of the manipulated variables.

11. The computer program according to claim 10, wherein the processing of generating a test pattern includes processing of generating, as a test pattern, a chirp signal indicating a time-series change in an manipulated variable.

12. The computer program according to claim 10, wherein the computer program causes the computer to further execute processing of correcting the test pattern based on first coverage of a first space that the manipulated variable is allowed to take and second coverage of a second space that a change rate value of the manipulated variable is allowed to take.

13. The computer program according to claim 12, wherein the computer program causes the computer to further execute at least one piece of:
processing of removing a domain that the manipulated variable is not allowed to take from the first space, and
processing of removing a domain that the change rate value is not allowed to take from the second space.

14. The computer program according to claim 10, wherein the computer program causes the computer to further execute processing of correcting the test pattern based on a regulation value of exhaust gas.

15. The computer program according to claim 10, wherein the processing of correcting the test pattern based on the excess air ratio includes processing of correcting the test pattern by changing a fuel injection amount, which is one of the manipulated variables.

16. The computer program according to claim 10, wherein the processing of correcting the test pattern based on an excess air ratio includes processing of correcting the test pattern by changing an EGR rate, which is one of the manipulated variables.

17. The computer program according to claim 10, wherein the processing of correcting the test pattern based on an excess air ratio includes processing of correcting the test pattern by changing a turbine opening degree, which is one of the manipulated variables.

18. The computer program according to claim 10, wherein the processing of correcting the test pattern based on an excess air ratio includes processing of correcting the test pattern by changing an intake throttle opening degree, which is one of the manipulated variables.

19. A device comprising:
a generation unit configured to generate a test pattern in which a plurality of manipulated variables used for an engine test change in chronological order;
a correction unit configured to correct the test pattern based on the excess air ratio; and
an acquisition unit configured to perform an engine test using the corrected test pattern to acquire time-series data on the manipulated variables and controlled amounts of the manipulated variables.

20. The device according to claim 19, wherein the processing of generating a test pattern includes processing of generating, as a test pattern, a chirp signal indicating a time-series change in an manipulated variable.

21. The device according to claim 19, wherein the correction unit is further configured to execute processing of correcting the test pattern based on first coverage of a first space that the manipulated variable is allowed to take and second coverage of a second space that a change rate value of the manipulated variable is allowed to take.

22. The device according to claim 21, wherein the correction unit is further configured to execute at least one piece of:
processing of removing a domain that the manipulated variable is not allowed to take from the first space, and
processing of removing a domain that the change rate value is not allowed to take from the second space.

23. The device according to claim 19, wherein the correction unit is further configured to execute processing of correcting the test pattern based on a regulation value of exhaust gas.

24. The device according to claim 19, wherein the processing of correcting the test pattern based on the excess air ratio includes processing of correcting the test pattern by changing a fuel injection amount, which is one of the manipulated variables.

25. The device according to claim 19, wherein the processing of correcting the test pattern based on an excess air ratio includes processing of correcting the test pattern by changing an EGR rate, which is one of the manipulated variables.

26. The device according to claim 19, wherein the processing of correcting the test pattern based on an excess air ratio includes processing of correcting the test pattern by changing a turbine opening degree, which is one of the manipulated variables.

27. The device according to claim 19, wherein the processing of correcting the test pattern based on an excess air ratio includes processing of correcting the test pattern by changing an intake throttle opening degree, which is one of the manipulated variables.

28. A device comprising:
a processor; and
a memory connected to the processor so as to be operable, in which
the processor includes:
a generation unit configured to generate a test pattern in which a plurality of manipulated variables used for an engine test change in chronological order,
a correction unit configured to correct the test pattern based on an excess air ratio, and
an acquisition unit configured to perform an engine test using the corrected test pattern to acquire time-series data on the manipulated variables and controlled amount of the manipulated variables.
